# EUROPÄISCHE PATENTSCHRIFT

(11) **EP 0 653 320 B1**
(45) Veröffentlichungstag und Bekanntmachung des Hinweises auf die Patenterteilung: **06.05.1998**
(21) Anmeldenummer: 94117250.4
(22) Anmeldetag: 02.11.1994
(51) Int. Cl.: B60G 7/02, B60G 3/06

(54) **Kraftfahrzeug-Vorderachse**
Motor vehicle front axle
Essieu avant pour véhicule à moteur

(30) Priorität: 11.11.1993 DE 4338509
(43) Veröffentlichungstag der Anmeldung: 17.05.1995
(73) Patentinhaber: ADAM OPEL AG, 65423 Rüsselsheim (DE)
(72) Erfinder: Klose, Norbert, Ing., D-67586 Hillesheim (DE)
(74) Vertreter: Bergerin, Ralf, Dipl.-Ing.

(56) Entgegenhaltungen:
- EP-A- 0 268 007
- EP-A- 0 284 049
- DE-A- 3 441 560
- DE-A- 3 624 537
- DE-A- 3 635 612
- DE-A- 4 142 587

## Beschreibung

Die Erfindung betrifft eine Kraftfahrzeug-Vorderachse mit einem von zwei Querlenkern geführten Radträger, bei der der hintere Querlenker mittels einer stehend angeordneten, in unterschiedlichen radialen Achsen eine unterschiedliche Federrate aufweisenden Dämpfungsbuchse mit einem feststehenden Rahmen des Kraftfahrzeugs verbunden und bei der zum Verschwenken des Radträgers an diesem eine Spurstange angelenkt ist.

Eine Kraftfahrzeug-Vorderachse der vorstehenden Art ist Gegenstand der EP-B-0 265 675. Diese Schrift befaßt sich mit der Ausbildung der Kraftfahrzeug-Vorderachse zum Zwecke der Vereinfachung der Montage. Die Dämpfungsbuchsen sind bei der Kraftfahrzeug-Vorderachse so ausgerichtet, daß sie in Fahrzeugquerrichtung ihre größte Weichheit aufweisen. Dadurch verändert sich beim Anfahren und Bremsen des Kraftfahrzeugs der Spurwinkel der Vorderräder, was insbesondere beim Bremsen zu einer größeren Richtungsstabilität führen soll.

Bei heutigen Kraftfahrzeug-Vorderachsen treten zunehmende Probleme aufgrund von Lenkrad-Drehschwingungen und Drehstößen auf, wodurch die Lebensdauer von auf diese Weise beanspruchten Teilen sinkt. Hinzu kommt, daß aufgrund von Schwingungen und Stößen im Lenkrad Fahrzeuglenker allgemein auf eine einfache und nicht ausreichend solide Fahrzeugkonstruktion schließen. Es ist deshalb erforderlich, Maßnahmen zu treffen, durch die solche Schwingungen und Stöße verhindert werden können. Hierzu ist es bekannt, in die Lenkung einen Lenkungsdämpfer einzubauen oder die Radaufhängung mit Zusatzlenkern zu versehen, was jedoch erhebliche, zusätzliche Kosten verursacht, so daß man bei einfacheren Fahrzeugmodellen hierauf verzichten muß.

Der Erfindung liegt das Problem zugrunde, eine Kraftfahrzeug-Vorderachse der eingangs genannten Art so auszubilden, daß die durch Radunwuchten und dynamische Längskräfte verursachten Lenkraddrehschwingungen und Stöße mit möglichst geringem Aufwand vermindert oder sogar vermieden werden können.

Dieses Problem wird erfindungsgemäß dadurch gelöst, daß die radiale Achse der größten Weichheit der Dämpfungsbuchse einen spitzen Winkel mit der Längsrichtung des Kraftfahrzeugs einschließt und derart ausgerichtet ist, daß der Momentanpol des durch Längskräfte hervorgerufene Bewegung des Vorderrades zum inneren Ende der Spurstange hin verschoben ist.

Die Schrift EP-A-0 284 675 zeigt eine Kraftfahrzeug-Vorderachse gemäß dem Oberbegriff des Anspruchs 1, wobei der Momentanpol der Vorderachse durch steigende axial wirkende Kräfte verschoben wird, aber im Gegensatz zur Erfindung wird der Momentanpol nicht zum inneren Ende der Spurstange hin verschoben, um eine weitest mögliche Überdeckung des Momentanpols mit dem inneren Ende der Spurstange zu erzielen.

Diese erfindungsgemäße Gestaltung einer Kraftfahrzeug-Vorderachse bedingt gegenüber bekannten Kraftfahrzeug-Vorderachsen keinerlei Mehraufwand. Es ist lediglich erforderlich, die ohnehin vorhandenen Dämpfungsbuchsen in eine bestimmte Position auszurichten. Die Erfindung baut auf der Erkenntnis auf, daß bei üblichen Kraftfahrzeug-Vorderachsen die durch Unwuchten oder axial wirkenden Kräfte verursachten Lenkerbewegungen auf einem Kreisbogen erfolgen, dessen Kreismittelpunkt nicht im inneren Anlenkpunkt der Spurstange liegt. Dadurch entstehen in der Spurstange Längskräfte, welche die unerwünschten Drehschwingungen und Drehstöße hervorrufen. Durch die erfindungsgemäße Ausrichtung der Dämpfungsbuchsen wird der Momentanpol der auf das Vorderrad wirkenden Kräfte zum inneren Spurstangenende hin verschoben. Jede Dämpfungsbuchse hat somit die Funktion eines Zusatzlenkers gegen Lenkradschwingungen und Drehstöße.

Besonders vorteilhaft ist es, wenn die Dämpfungsbuchsen beider Fahrzeugseiten in einer solchen Winkelposition angeordnet sind, daß ihre radialen Achsen größter Weichheit aus einer in Fahrzeuglängsrichtung verlaufenden Position etwa 5° bis 15° zur Fahrzeugmitte hin weisen. Die Richtung, in welche die Dämpfungsbuchsen hierbei aus der Fahrzeuglängsrichtung heraus verdreht werden müssen, hängt von der jeweiligen Fahrzeuggeometrie ab und ergibt sich aus der jeweiligen Lenkerbewegung um den Momentanpol und der Bewegung der äußeren Enden der Spurstangen.

Die in unterschiedlichen Richtungen unterschiedliche Härte der Dämpfungsbuchsen kann auf unterschiedliche Weise erreicht werden. Die Erfindung läßt sich mit handelsüblichen Dämpfungsbuchsen verwirklichen, wenn gemäß einer anderen Weiterbildung der Erfindung die Dämpfungsbuchsen zur Erzeugung ihrer in unterschiedlichen Richtungen unterschiedlichen Federraten in Axialrichtung verlaufende Schlitze aufweisen.

Traktionsverluste beim Anfahren können vermieden werden, wenn der Federweg der Dämpfungsbuchsen in Richtung der größten Weichheit an mindestens einem Schlitz durch einen Anschlag begrenzt ist. Der Anschlag kann beispielsweise an einem in Fahrtrichtung gesehen hinteren Schlitz angeordnet werden.

Besonders einfach ist der Anschlag zu verwirklichen, wenn er durch den Querschnitt der Schlitze gebildet ist.

Der durch den Anschlag begrenzte, freie Federweg beim Anfahren ist optimal, wenn die Dämpfungsbuchsen in Richtung ihrer größten Weichheit einen maximalen, weichen Federweg von 0 bis 1 mm haben.

Die Erfindung läßt verschiedene Ausführungsformen zu. Zur weiteren Verdeutlichung ihres Grundprinzips wird nachfolgend auf die Zeichnung Bezug genommen. Diese zeigt in
- Fig. 1: eine Draufsicht auf einen rechten Bereich einer üblichen Kraftfahrzeug-Vorderachse,
- Fig. 2: eine Draufsicht auf einen rechten Bereich einer Kraftfahrzeug-Vorderachse nach der Erfindung.

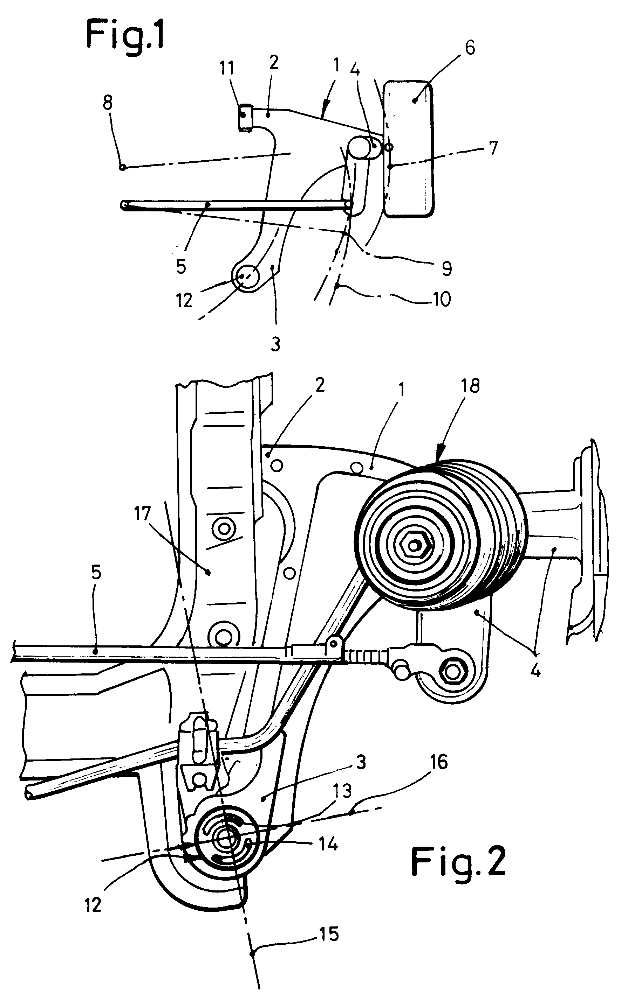

Die Figur 1 zeigt ein Radführungsteil 1, welches mit einem vorderen Querlenker 2 und einem hinteren Querlenker 3 eine Baueinheit bildet. Am Radführungsteil 1 ist ein Radträger 4 angelenkt, der mittels einer Spurstange 5 auf übliche Weise um eine senkrechte Achse verschwenkt werden kann. Der Radträger 4 trägt ein rechtes Vorderrad 6. Am fahrzeuginneren Ende des vorderen Querlenkers 2 ist eine liegende Dämpfungsbuchse 11, am fahrzeuginneren Ende des hinteren Querlenkers 3 eine stehende Dämpfungsbuchse 12 jeweils zur gelenkigen Verbindung mit einem nicht gezeigten Rahmen des Fahrzeugs vorgesehen.

Wirken Längskräfte auf das Vorderrad 6, dann hat es die Tendenz, sich auf einem Kreisbogen 7 zu verschwenken, dessen Mittelpunkt durch einen Momentanpol 8 gebildet ist. Das mit der Spurstange 5 verbundene Ende des Radträgers 4 bewegt sich dann auf einem parallelen Kreisbogen 9. Da das fahrzeuginnnenseitige Ende der Spurstange 5 sich jedoch nicht genau auf dem Momentanpol 8 befindet, kann sich ihr fahrzeugäußeres Ende nur um einen Kreisbogen 10 verschwenken, dessen Mittelpunkt durch das innere Ende der Spurstange 5 festgelegt ist. Da die Kreisbögen 9 und 10 sich nicht überdecken, kommt es infolge der Bahnabweichungen zu Spurstangenkräften, die Lenkungsschwingungen und Lenkradstöße verursachen, was durch die Erfindung vermieden wird.

Die die Erfindung betreffende Figur 2 zeigt, daß die Dämpfungsbuchse 12 des hinteren Querlenkers 3 zwei axiale Schlitze 13, 14 hat. Dadurch ist die Dämpfungsbuchse 12 in Richtung einer Achse 15 weicher als in Richtung einer hierzu rechtwinklig verlaufenden Achse 16. Wichtig für die Erfindung ist, daß die Achse 15 in einem Winkel von 5 bis 15° zur Fahrzeuglängsrichtung verläuft. Die Achse 15 der Dämpfungsbuchse 12 schneidet deshalb die nicht gezeigte Achse der gegenüberliegenden, ebenfalls nicht zu sehenden Dämpfungsbuchse auf der Fahrzeugmitte vor den Dämpfungsbuchsen 12, wobei ein nach hinten hin offener Winkel von 10 - 30° entsteht.

Die Figur 2 läßt auch einen Teil eines Fahrzeugrahmens 17 erkennen, an dem das Radführungsteil 1 angelenkt ist. Weiterhin sieht man in Figur 2 ein Federbein 18, welches sich auf dem Radführungsteil 1 abstützt. Dargestellt sind desweiteren der Radträger 4 und die Spurstange 5.

## Patentansprüche

1. Kraftfahrzeug-Vorderachse mit einem von zwei Querlenkern (2, 3) geführten Radträger (4), bei der der hintere Querlenker (3) mittels einer stehend angeordneten, in unterschiedlich radialen Achsen (15, 16) eine unterschiedliche Federrate aufweisenden Dämpfungsbuchse (12) mit einem feststehenden Rahmen des Kraftfahrzeuges verbunden und bei der zum Verschwenken des Radträgers (4) an diesem eine Spurstange (5) angelenkt ist, **dadurch gekennzeichnet**, daß die radiale Achse (15) der größten Weichheit der Dämpfungsbuchse (12) einen spitzen Winkel mit der Längsrichtung des Kraftfahrzeugs einschließt und derart ausgerichtet ist, daß der Momentanpol (8) der durch Längskräfte hervorgerufenen Bewegung des Vorderrades (6) zum inneren Ende der Spurstange (5) hin verschoben ist.

2. Kraftfahrzeug-Vorderachse nach Anspruch 1, **dadurch gekennzeichnet**, daß die Dämpfungsbuchsen (12) beider Fahrzeugseiten in einer solchen Winkelposition angeordnet sind, daß ihre radialen Achsen (15) größter Weichheit aus einer in Fahrzeuglängsrichtung verlaufenden Position etwa 5° bis 15° zur Fahrzeugmitte hin weisen.

3. Kraftfahrzeug-Vorderachse nach den Ansprüchen 1 oder 2, **dadurch gekennzeichnet**, daß die Dämpfungsbuchsen (12) zur Erzeugung ihrer in unterschiedlichen Richtungen unterschiedlichen Federraten in Axialrichtung verlaufende Schlitze (13, 14) aufweisen.

4. Kraftfahrzeug-Vorderachse nach zumindest einem der vorangehenden Ansprüche, **dadurch gekennzeichnet**, daß der Federweg der Dämpfungsbuchsen (12) in Richtung der größten Weichheit an mindestens einem Schlitz durch einen Anschlag begrenzt ist.

5. Kraftfahrzeug-Vorderachse nach Anspruch 4, **dadurch gekennzeichnet**, daß der Anschlag durch den Querschnitt der Schlitze (13, 14) gebildet ist.

6. Kraftfahrzeug-Vorderachse nach Anspruch 5, **dadurch gekennzeichnet**, daß die Dämpfungsbuchsen (12) in Richtung ihrer größten Weichheit an mindestens einem Schlitz einen maximalen, weichen Federweg von 0 bis 1 mm haben.

## Claims

1. Motor vehicle front axle with a hub carrier (4) guided by two transverse links (2, 3), in which the rear transverse link (3) is connected to a fixed frame of the motor vehicle by means of a stationary damping bush (12) having different spring rates in different radial axes (15, 16), and in which for pivoting of the hub carrier (4) a track rod (5) is linked to the latter, characterised in that the radial axis (15) of greatest softness of the damping bush (12) forms an acute angle with the longitudinal direction of the motor vehicle and is oriented in such a way that the instantaneous centre (8) of movement of the front wheel (6) caused by longitudinal forces is shifted towards the inner end of the track rod (5).

2. Motor vehicle front axle according to claim 1, characterised in that the damping bushes (12) of both sides of the vehicle are arranged in such an angular position that their radial axes (15) of greatest softness point out of a position extending in the longitudinal direction of the vehicle about 5 to 15° towards the centre of the vehicle.

3. Motor vehicle front axle according to claim 1 or 2, characterised in that the damping bushes (12) to produce their different spring rates in different directions have slots (13, 14) extending in the axial direction.

4. Motor vehicle front axle according to one or more of the preceding claims, characterised in that the spring travel of the damping bushes (12) in the direction of greatest softness is limited by a stop at at least one slot.

5. Motor vehicle front axle according to claim 4, characterised in that the stop is formed by the cross-section of the slots (13, 14).

6. Motor vehicle front axle according to claim 5, characterised in that the damping bushes (12) in the direction of their greatest softness have a maximum soft spring travel of 0 to 1 mm at at least one slot.

## Revendications

1. Essieu avant de véhicule automobile, comprenant un support de roue (4) guidé par deux bras oscillants transversaux (2, 3), le bras oscillant arrière (3) étant relié à un châssis fixe du véhicule automobile au moyen d'un manchon amortisseur (12) disposé en position verticale et présentant des raideurs différentes suivant des axes radiaux (15, 16) différents, une barre d'accouplement (5) étant articulée sur le support de roue (2) en vue du pivotement de ce dernier, caractérisé par le fait que l'axe radial (15) suivant lequel le manchon amortisseur (12) présente la plus grande souplesse fait un angle aigu avec la direction longitudinale du véhicule et est orienté de manière que le pôle momentané (8) du mouvement de la roue avant (6) provoqué par des efforts longitudinaux soit décalé vers l'extrémité intérieure de la barre d'accouplement (5).

2. Essieu avant de véhicule automobile suivant la revendication 1, caractérisé par le fait que les manchons amortisseurs (12) sur les deux côtés du véhicule sont disposés dans une position angulaire telle que leurs axes radiaux (15) correspondant à la plus grande souplesse soient orientés, suivant la direction longitudinale du véhicule, sous un angle d'environ 5° à 15° vers le milieu du véhicule.

3. Essieu avant de véhicule automobile suivant les revendications 1 ou 2, caractérisé par le fait que les manchons amortisseurs (12) présentent des fentes (13, 14) orientées dans la direction axiale en vue de l'obtention de leurs raideurs différentes dans des directions différentes.

4. Essieu avant de véhicule automobile suivant au moins l'une des revendications précédentes, caractérisé par le fait que la déflexion des manchons amortisseurs (12) dans la direction de la plus grande souplesse est limitée sur au moins une fente par une butée.

5. Essieu avant de véhicule automobile suivant la revendication 4, caractérisé par le fait que la butée est constituée par le profil transversal des fentes (13, 14).

6. Essieu avant de véhicule automobile suivant la revendication 5, caractérisé par le fait que les manchons amortisseurs (12) présentent, dans la direction de leur plus grande souplesse, sur au moins une fente, une déflexion maximale de 0 à 1 mm.
